# EUROPEAN PATENT APPLICATION

(11) **EP 2 924 255 A1**
(43) Date of publication of application: **30.09.2015**
(21) Application number: 13857144.3
(22) Date of filing: 11.11.2013
(51) Int. Cl.: F01M 13/04, B04C 5/04, B04C 5/28

(54) **OIL SEPARATOR**

(30) Priority: 22.11.2012 JP 2012256713
(71) Applicant: Aisin Seiki Kabushiki Kaisha, Kariya-shi Aichi 448-8650 (JP)
(72) Inventor: KIRA, Naoki, Kariya-shi, Aichi 448-8650 (JP); NISHIGAKI, Atsushi, Kariya-shi, Aichi 448-8650 (JP)
(74) Representative: Kramer Barske Schmidtchen Patentanwälte PartG mbB
(86) International application number: PCT/JP2013/080430
(87) International publication number: WO 2014/080788

(57) **Abstract**

An oil separator, which is not susceptible to influence of outside air, includes at least one set of cyclone-type oil separation unit performing gas-liquid separation of blow-by gas, a distribution chamber distributing the blow-by gas flowing into the oil separation unit, an inflow port causing the blow-by gas to flow into the distribution chamber, a branch passage causing the blow-by gas to flow from the distribution chamber to each oil separation unit individually, a first cover portion placed over the oil separation unit to include therewithin the distribution chamber, the inflow port and the branch passage and to enclose the distribution chamber, the inflow port and the branch passage, and a second cover portion including therewithin the first cover portion and enclosing the first cover portion, wherein part of at least an upper surface portion of the oil separator is formed in a two-layer structure by the first cover portion and the second cover portion.

## Description

### TECHNICAL FIELD

The present invention relates to an oil separator separating oil mist from blow-by gas.

### BACKGROUND ART

An engine obtains motive power by burning mixed gas in a combustion chamber, thereby rotating a crankshaft. However, not all the mixed gas introduced to the combustion chamber is burnt. Part of the mixed gas leaks out to a crankcase from a gap between a piston and a cylinder. The gas that has leaked is referred to as blow-by gas. The blow-by gas is unburnt gas and discharging as is to the atmosphere as exhaust gas is prohibited by law. Therefore, the blow-by gas is configured to flow back to an intake port-side again via a PCV (Positive Crankcase Ventilation) passage, be burnt in the combustion chamber together with new mixed gas, and then be discharged to the atmosphere.

In the blow-by gas, lubrication oil such as engine oil exists as oil mist. It is undesired that the blow-by gas including such an oil mist is flowed back to an intake port because the oil comes to be attached to the PCV passage and/or a vicinity of the intake port. Thus, an oil separator is provided inside the cylinder head cover and/or in the middle of the PCV passage to collect the oil mist in the blow-by gas.

An oil separator using plural cyclones is disclosed in Patent document 1. The oil separator introduces blow-by gas, which flows therein from a gas introduction port, via a flow-rectifying chamber to the plural cyclones arranged in a line. Oil mist in the blow-by gas is gathered and collected by centrifugal forces caused by swirling flows occurring inside the cyclones.

### DOCUMENT OF KNOWN ART

### PATENT DOCUMENT

Patent document 1: JP2009-221857A

### OVERVIEW OF INVENTION

### PROBLEM TO BE SOLVED BY INVENTION

In technique described in Patent document 1, the oil separator is assembled on an engine in a state where the oil separator is exposed to outside air. Thus, the oil separator is susceptible to influence of the outside air. In a case where a vehicle on which the oil separator is mounted is parked in a state where, for example, temperature of the outside air is extremely low, an inside of the oil separator and/or a PCV valve freeze and there is a problem that, immediately after the engine is started, the oil mist included in the blow-by gas is not appropriately collected. In addition, despite an attempt to warm up the oil separator in association with the start-up of the engine, it is difficult to warm up the oil separator that is influenced by the outside air, and it takes time to defrost.

An object of the present invention is to provide an oil separator which is not susceptible to influence of the outside air in light of the above-described problem.

### MEANS FOR SOLVING PROBLEM

An aspect of an oil separator related to the present invention for achieving the above-described object is that an oil separator includes at least one set of cyclone-type oil separation unit performing gas-liquid separation of blow-by gas, a distribution chamber distributing the blow-by gas flowing into the oil separation unit, an inflow port causing the blow-by gas to flow into the distribution chamber, a branch passage causing the blow-by gas to flow from the distribution chamber to each oil separation unit individually, a first cover portion placed over the oil separation unit to include therewithin the distribution chamber, the inflow port and the branch passage and to enclose the distribution chamber, the inflow port and the branch passage, a second cover portion including therewithin the first cover portion and enclosing the first cover portion, wherein part of at least an upper surface portion of the oil separator is formed in a two-layer structure by the first cover portion and the second cover portion.

According to the above-described configuration, due to the double-layer structure formed by the first cover portion and the second cover portion, a heat insulating property of an upper surface portion of the oil separator can be enhanced. Accordingly, for example, even in a case where there is a temperature difference between an inside of the first cover portion and an outside of the second cover portion, influences of the temperature which are given to each other can be reduced. Thus, even in a case where, for example, the outside of the second cover portion is at an extremely low temperature and even the inside of the first cover portion is frozen, it can be restricted that temperature of the blow-by gas supplied to the inside of the first cover portion is lowered by the influence of the temperature of the outside of the second cover portion, and therefore the blow-by gas can warm up the inside of the first cover portion easily. As a result, even in a case where each portion of the oil separation unit, the distribution chamber, the inflow port, the branch passage is frozen, defrosting is done quickly by the blow-by gas, and the oil separator can be operated quickly and appropriately. Thus, according to the present invention, the oil separator that is not easily influenced by the outside air can be realized.

In addition, it is ideal that at least part of a lateral surface portion is formed in the two-layer structure by the first cover portion and the second cover portion.

According to the above-described configuration, also the heat insulating property of the lateral surface portion can be enhanced in addition to the above-described upper surface portion. Accordingly, the oil separator is even less susceptible to the outside air.

In addition, it is ideal that the portion formed in the two-layer structure corresponds to a closed space portion.

According to the above-described configuration, the inside of the oil separator can be covered with the closed space portion, and therefore the heat insulating property of the oil separator can be further enhanced.

In addition, it is ideal that each of the first cover portion, the second cover portion and the oil separation unit is provided with a contact portion formed by a surface facing a same direction in a state where the first cover portion and the second cover portion are assembled on the oil separation unit.

According to the above-described configuration, the first cover portion, the second cover portion and the oil separation unit can be assembled on one another from the same direction, thereby allowing an easy assembling work. In addition, the double-layer structure can be formed easily. Consequently, manufacturing costs are reduced and the oil separator related to the present invention can be realized inexpensively.

In addition, it is ideal that heat insulation material is provided between the first cover portion and the second cover portion.

According to the above-described configuration, the influence of the temperature difference between the outside air and an inside of the oil separator can be further reduced by the heat insulating material. Consequently, the heat insulating property of the oil separator can be further enhanced.

In addition, it is ideal that at least an upper surface portion of a storage space portion, at which the blow-by gas discharged from a gas discharge port of the oil separation unit after the gas-liquid separation is performed is stored, is formed in the two-layer structure.

According to the above-described configuration, the temperature of the blow-by gas after the gas-liquid separation is done is prevented from decreasing. Consequently, the warm blow-by gas can be introduced to the storage space portion and/or the gas discharge port, thereby facilitating the defrosting of the storage space portion and/or the gas discharge port.

### BRIEF DESCRIPTION OF DRAWINGS

[Fig. 1] Exploded perspective view illustrating an external appearance of an oil separator related to a first embodiment
[Fig. 2] Lateral cross-sectional view of the oil separator
[Fig. 3] Cross-sectional view taken along line III-III in Fig. 2
[Fig. 4] Cross-sectional view taken along line IV-IV in Fig. 3
[Fig. 5] Longitudinal sectional view illustrating a schematic configuration of an oil separator related to a second embodiment

### MODE FOR CARRYING OUT INVENTION

### 1. First embodiment

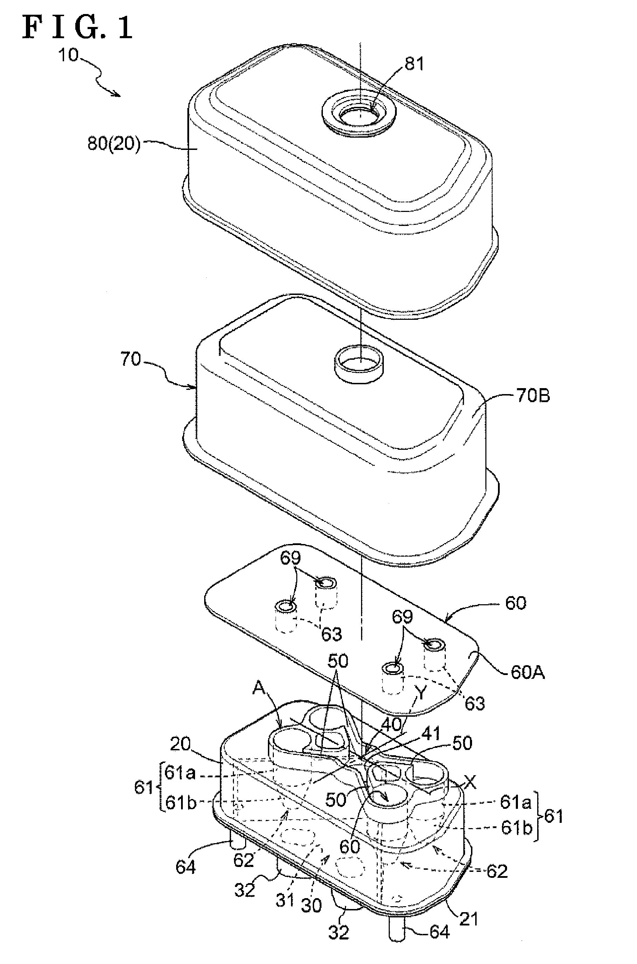

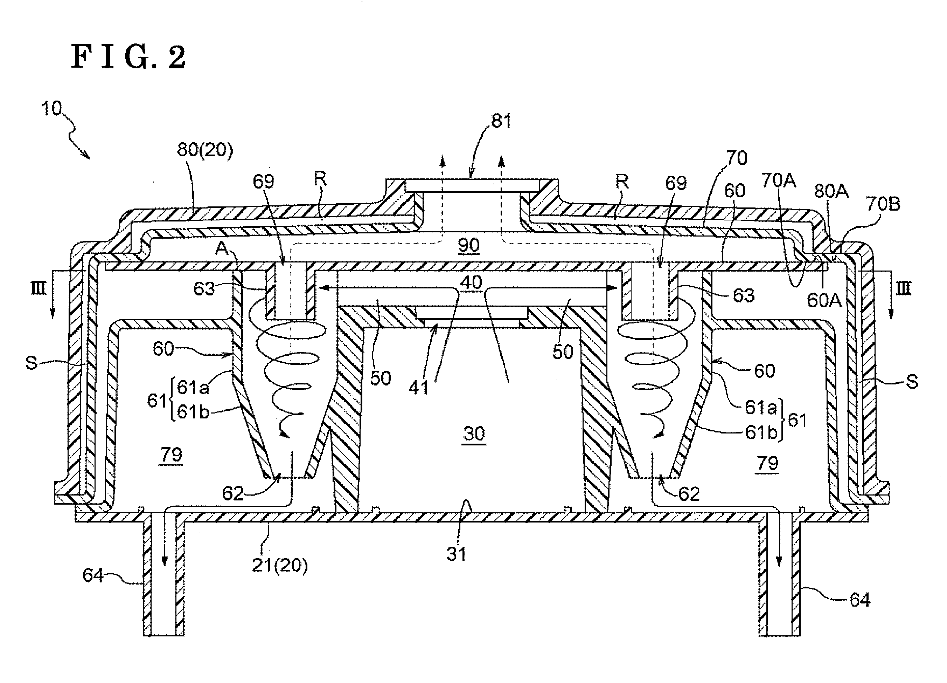

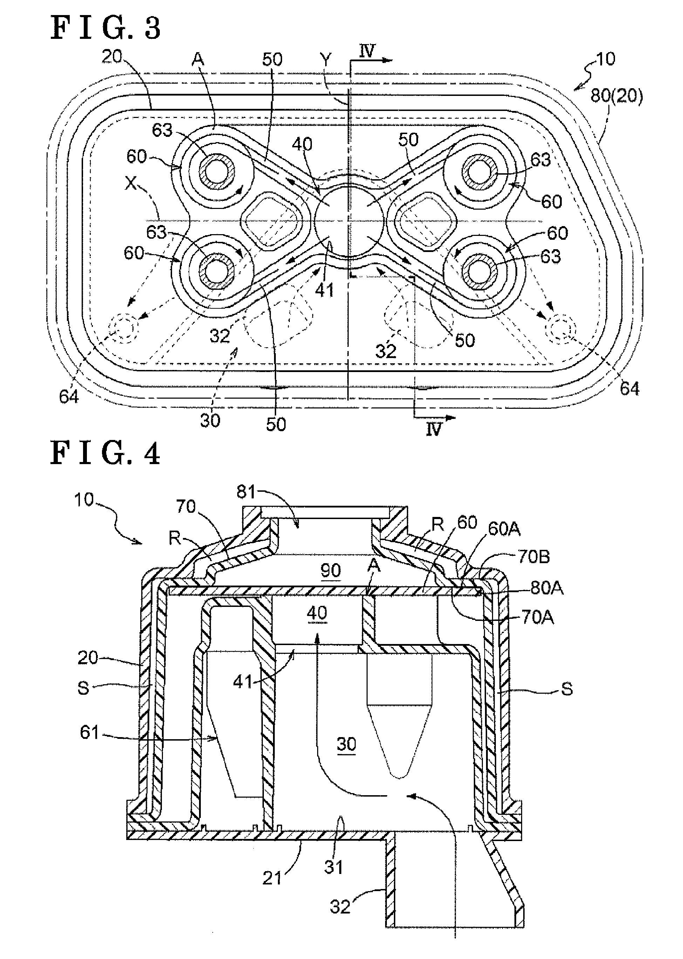

An oil separator related to the present invention is provided with a function of reducing influence of outside air so that the oil separator is easily warmed up at start-up of an engine. The oil separator related to the present embodiment will be described hereunder with reference to the drawings. Fig. 1 is an exploded perspective view illustrating an external appearance of an oil separator 10 related to the present embodiment. Fig. 2 is a lateral cross-sectional view of the oil separator 10. Fig. 3 is a cross-sectional view taken along line III-III in Fig. 2. Fig. 4 is a cross-sectional view taken along line IV-IV in Fig. 3. The oil separator 10 is made of resin and is arranged inside a head cover of the engine of a vehicle (not shown).

As illustrated in Fig. 1 and Fig. 2, the oil separator 10 is provided with a housing 20 constituting an outer wall, a first storage chamber 30 formed inside the housing 20, a gas introduction pipe 32, a distribution chamber 40, an inflow port 41, an oil separation unit 60, an oil discharge pipe 64, a branch passage 50, a second storage chamber 90, a gas discharge hole 81, a first cover portion 70 and a second cover portion 80.

The first storage chamber 30 is constituted by a space portion which is formed by a partition plate to include a shape of a triangular prism. A bottom surface 31 of the first storage chamber 30 is constituted by part of a bottom plate 21 constituting the housing 20. As illustrated in Fig. 1, two of the gas introduction pipes 32 are integrally formed at the bottom surface 31. Each of the gas introduction pipes 32 includes a hole formed at the bottom surface 31, and a cylindrical wall having a cylindrical hole continuous with the hole and protruding from the bottom plate 21 towards an outer side of the oil separator 10. The gas introduction pipes 32 are connected to a gas introduction passage that is not shown. Thus, blow-by gas is introduced from the gas introduction pipes 32 into the first storage chamber 30.

The blow-by gas is sucked by negative pressure generated by air flowing through an intake port connected to a downstream side relative to the oil separator 10, and then flows through inside the oil separator 10. As illustrated in Fig. 4, the blow-by gas sucked from a crankcase and flowing through the gas introduction passage flows into an inside of the first storage chamber 30 from the gas introduction pipe 32. The blow-by gas that has flowed thereto is once stored within the first storage chamber 30. As illustrated in Fig. 2 and Fig. 3, the blow-by gas that has flowed into the first storage chamber 30 flows into the distribution chamber 40 which will be described below.

At a downstream-side relative to the first storage chamber 30, the distribution chamber 40 is provided. The distribution chamber 40 distributes the blow-by gas flowing into the oil separation unit 60 that will be described below. The distribution chamber 40 is formed by a cylindrical space portion. The distribution chamber 40 is in communication with the first storage chamber 30 via the inflow port 41. Accordingly, the blow-by gas introduced to the above-described first storage chamber 30 is flowed into the distribution chamber 40 via the inflow port 41. In the present embodiment, the inflow port 41 is formed in a circular shape. It is configured in such a manner that a capacity of the distribution chamber 40 is extremely smaller compared to a capacity of the first storage chamber 30. At a lateral surface of the distribution chamber 40, the branch passage 50 extending linearly towards an outer side in a radial direction to be parallel to the bottom surface 31 is formed. The branch passage 50 is provided to be in communication with the distribution chamber 40.

The branch passage 50 causes the blow-by gas to flow from the distribution chamber 40 to each oil separation unit 60 individually. In the present embodiment, as will be described below, four sets of the oil separation units 60 are provided. Accordingly, four of the branch passages 50 are provided. In the present embodiment, the four branch passages 50 are configured in such a manner that an area of a passage cross-section which is orthogonal to a flow direction of the blow-by gas is equal to one another and a passage length is equivalent to one another. Thus, the blow-by gas that has flowed to the distribution chamber 40 can be flowed to the four oil separation units 60 appropriately.

The oil separation units 60 perform gas-liquid separation of the blow-by gas. The blow-by gas corresponds to mixed gas which is introduced to a combustion chamber of the engine and is exposed from a gap between a piston and a cylinder without being burnt. The gas-liquid separation is to separate gas and liquid from each other. Here, in the blow-by gas, together with the mixed gas, lubrication oil such as engine oil is included as oil mist. Accordingly, the gas-liquid separation means to separate the blow-by gas into the mixed gas, which is gas, and the oil mist, which is liquid.

The oil separation unit 60 is constituted by at least a set of cyclone-type oil separation unit, and each is provided with a main body portion 61, an oil discharge portion 62 and a gas discharge portion 63. The present embodiment is configured to include the four sets of the oil separation units 60. The four oil separation units 60 are of the same size, and axis centers thereof are arranged to be parallel to one another and to be orthogonal to the flow direction of the blow-by gas of the branch passage 50. Further, as illustrated in Fig. 3, the branch passages 50 and the oil separation units 60 are arranged to be line symmetric about a plane surface X and a plane surface Y which pass through an axis center of the inflow port 41 (the distribution chamber 40) and which are orthogonal to each other.

The main body portion 61 is configured to include a cylindrical portion 61a including a cylindrical shape and a conical portion 61b which is continuous to a lower end of the cylindrical portion 61a and of which a diameter is reduced towards a lower side to be coaxially with the cylindrical portion 61a. Each of the branch passages 50 and the oil separation units 60 is arranged in such a manner that a tangential direction of an inner circumferential surface of the cylindrical portion 61a corresponds to the branch passage 50. At a lower end of the conical portion 61b, an opening serving as the oil discharge portion 62 is formed. As illustrated in Fig. 3, by arranging the two oil separation oil units 60 which face each other with respect to the plane surface X to be close to each other and arranging the other two oil separation oil units 60, which face each other with respect to the plane surface Y, to be spaced apart from each other, a thickness of the oil separator 10 in a direction orthogonal to the plane surface X can be thin.

The blow-by gas flowing through the branch passages 50 flows into the oil separation units 60 and then flows along the inner circumferential surfaces of the cylindrical portions 61 a. Inside each oil separation unit 60, the blow-by gas forms a swirling flow that descends downwardly towards the conical portion 61b while swirling along the inner circumferential surface of the cylindrical portion 61 a. Due to the swirling flow, centrifugal force occurs to the blow-by gas, and the oil mist in the blow-by gas collides with the inner circumferential surface of the cylindrical portion 61a and/or the conical portion 61b and attaches thereto. Accordingly, the oil mist is separated from the blow-by gas and is collected. Thus, because the gas-liquid separation of the blow-by gas is performed utilizing the swirling flow, it is referred to as "the cyclone-type" in the present invention. As illustrated in Fig. 3, also swirling directions of the swirling that flow inside the respective oil separation units 60 are symmetric with one another with respect to the plane surface X and the plane surface Y. The oil mist attached to the inner circumferential surfaces of the cylindrical portions 61a and/or the conical portions 61b is gathered while flowing down on wall surfaces of the conical portions 61b, and then drips from the oil discharge portions 62 to the bottom plate 21.

At corner portions of the bottom plate 21, the oil discharge pipe 64 is formed at two positions for discharging the oil mist to an outside of the oil separator 10. As indicated by arrows with dotted lines in Fig. 3, at the bottom plate 21, gradual downward inclination is formed for each of the oil discharge pipes 64. The gradual downward inclination is formed from positions intersecting with the axis centers of the two oil separation units 60 towards one of the oil discharge pipes 64. Accordingly, as indicated by the arrows with the dotted lines in Fig. 3 and as illustrated in Fig. 2, the oil mist that has dripped flows down the inclination of the bottom plate 21 and flows through inner passages of the oil discharge pipes 64, and is then discharged to the outside of the oil separator 10 to return to an oil pan that is not shown.

The gas discharge portions 63 are formed to be integral with the first cover portion 70. Each of the gas discharge portions 63 includes a bore formed at the first cover portion 70 and a cylindrical wall which includes a cylindrical hole continuous with the bore and which protrudes from the first cover portion 70 towards the oil separation unit 60. A lower end of the gas discharge portion 63 is inside the cylindrical portion 61a and an axis center of the gas discharge portion 63 is coaxial with the cylindrical portion 61a. An upper end of the gas discharge portion 63 is opened to an outside of the first cover portion 70. The four gas discharge portions 63 are of the same size.

The first cover portion 70 is placed over the oil separation units 60, and is arranged to include therewithin the distribution chamber 40, the inflow port 41 and the branch passages 50 and to enclose the distribution chamber 40, the inflow port 41 and the branch passages 50. Thus, the distribution chamber 40, the inflow port 41, the branch passages 50 and the like, which are described above, can be accommodated in a closed space portion constituted by the bottom plate 21 and the first cover portion 70. Accordingly, the blow-by gas introduced to the first storage chamber 30 can be prevented from leaking outside.

The second storage chamber 90 is formed between the first cover portion 70 and the oil separation units 60. The blow-by gas on which the gas-liquid separation has been performed by the oil separation units 60 and which has been discharged from the gas discharge portions 63 is introduced to the second storage chamber 90.

The gas discharge hole 81 discharging the blow-by gas stored at the second storage chamber 90 to the outside the oil separator 10 is provided at the first cover portion 70. The blow-by gas stored at the second storage chamber 90 is the blow-by gas after the oil mist thereof is separated at the oil separation units 60. An axis center of the gas discharge hole 81 is coaxial with the distribution chamber 40. A gas discharge passage (not shown) which is in communication with the intake port is connected to the gas discharge hole 81.

As indicated by the arrows with the dotted lines in Fig. 2, the blow-by gas flows through the gas discharge portions 63 and flows in the second storage chamber 90. Thereafter, the blow-by gas is discharged from the gas discharge hole 81, flows through the gas discharge passage, and is flowed back to the intake port.

Here, the second cover portion 80 is arranged to include therewithin the first cover portion 70 and to enclose the cover portion 70. As illustrated in Fig. 2, the second cover portion 80 constitutes part of the housing 20 and is arranged above the first cover portion 70 in a manner that a clearance R is provided above the first cover portion 70. Thus, by the first cover portion 70 and the second cover portion 80, part of at least an upper surface portion is formed in a two-layer structure. In the present embodiment, the part of the at least the upper surface portion, that is, at least the upper surface portion of a storage space portion where the blow-by gas discharged from gas discharge ports of the oil separation units 60 after the execution of the liquid-gas separation is stored is formed in the two-layer structure. A gas discharge port 69 of each of the oil separation units 60 corresponds to an opening end portion of the gas discharge portion 63. The storage space portion where the blow-by gas, after the execution of the liquid-gas separation, is stored corresponds to the second storage chamber 90. Accordingly, in the present embodiment, at least the upper surface portion of the second storage chamber 90 is formed in the two-layer structure by the first cover portion 70 and the second cover portion 80. In the present embodiment, the two-layer structure is formed to a vicinity of the gas discharge hole 81.

As described above, the first cover portion 70 is attached above the distribution chamber 40, the branch passages 50, and the oil separation units 60. The first cover portion 70 is joined to an upper end edge portion A of the distribution chamber 40, the branch passages 50 and/or the oil separation units 60 which are illustrated in Fig. 1 by adhesion and/or welding without a clearance provided. Accordingly, the flowing blow-by gas does not leak to an outside of the distribution chamber 40 and/or the branch passages 50, and reliably flows into the oil separation units 60.

In addition, in the present embodiment, as illustrated in Fig. 2, also at least part of a lateral surface portion is formed in the two-layer structure by the first cover portion 70 and the second cover portion 80. The at least part of the lateral surface portion refers to a lateral surface portion of the oil separation unit 60. Thus, a heat insulating property of a space portion 79 to which the oil is discharged from the oil separation units 60 can be increased. Accordingly, even in a case where the space is frozen, the oil separator 10 can be operated quickly and appropriately.

The first cover portion 70, the second cover portion 80 and the oil separation units 60 are provided with contact portions 60A, 70A, 70B, 80A formed by surfaces facing the same direction in a state where the first cover portion 70 and the second cover portion 80 are assembled on the oil separation units 60. In the present embodiment, the surfaces facing the same direction are a direction which is parallel to an assembling direction. Accordingly, the contact portions 60A, 70A, 70B, 80A are provided to serve as surfaces intersecting with the assembling direction.

When the first cover portion 70 is being assembled on the oil separation units 60, it is performed in such a manner that the contact portion 60A of the oil separation units 60 and the contact portion 70A of the first cover portion 70 come into contact with each other. When the first cover portion 70 and the second cover potion 80 are being assembled on each other, it is performed in such a manner that the contact portion 70B of the first cover portion 70 and the contact portion 80A of the second cover portion 80 come into contact with each other. Such contact portions 60A, 70A, 70B, 80A are provided over each site of the first cover portion 70, the second cover portion 80 and the oil separation units 60. Accordingly, the portion of contact with each other is not one portion, and the contacts can be made throughout the entire circumference of the oil separator 10.

Such contacted portions may be ideally welded with the use of laser. In such a case, the portion formed in the two-layer structure can be constituted by the closed space portion, and thus the heat insulating property of the closed space portion can be enhanced. In addition, the blow-by gas can be prevented from leaking to the outside of the oil separator 10 because tightness of the oil separator 10 can be enhanced.

Thus, because the oil separator 10 is formed in the two-layer structure, it can be restricted that thermal energy of the blow-by gas introduced to the oil separator 10 is taken away by the outside air. Accordingly, the heat insulating property of the oil separator 10 can be increased. Consequently, even in a case where an inside of the oil separator 10 freezes, the inside of the oil separator can be defrosted quickly by the blow-by gas introduced in association with the start-up of the engine.

In the present embodiment, among the four branch passages, the areas of the passage cross-section which are orthogonal to the flow direction of the blow-by gas are equal to one another and the passage lengths are the same as one another, but are not limited thereto. Either of the passage cross-sectional area and the passage length may be the same.

In the present embodiment, the branch passages 50 and the oil separation units 60 are arranged to be symmetric about the plane surface X and the plane surface Y but are not limited thereto, and can be arranged to be symmetric about only one plane of either of the plane surface X and the plane surface Y.

### 2. Second embodiment

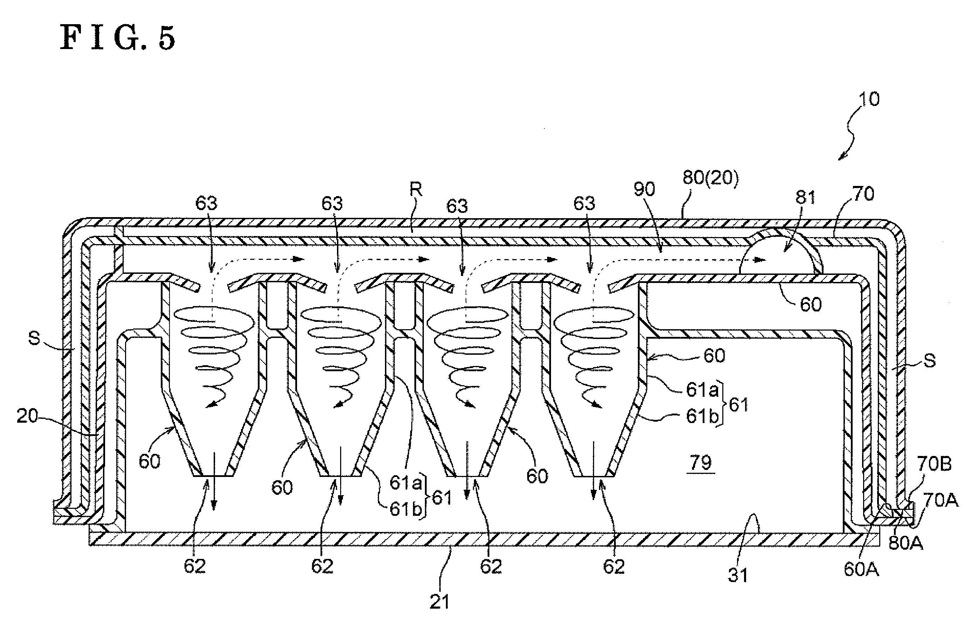

Next, the second embodiment of the oil separator 10 will be described. A lateral cross-sectional view of the oil separator 10 related to the second embodiment is illustrated in Fig. 5. The present embodiment differs from the first embodiment in that the inflow port 41 is formed at an end portion of the housing 20 and that the axis centers of the four oil separation units 60 are arranged in a line on the plane surface X. Further, an aspect that the gas discharge hole 81 is provided at an end portion of the oil separator 10 is also different from the first embodiment. By arranging the four oil separation units 60 in a line in such a manner that the four axis centers are on the plane surface X, a thickness of the oil separator 10 in the direction orthogonal to the plane surface X can be even thinner compared to the first embodiment.

In addition, also in the present embodiment, by the first cover portion 70 and the second cover portion 80, the upper surface portion of the second storage chamber 90 can be formed in the two-layer structure. Thus, the clearance R constituted by the closed space portion can be formed at the upper surface portion. In addition, also the lateral surface portion of the oil separation units 60 can be formed in the two-layer structure. Thus, a clearance S constituted by a closed space portion can be formed also at the lateral surface portion, thereby enhancing the heat insulating property of the oil separator 10. Accordingly, even in a case where the inside of the oil separator 10 is frozen, the oil separator 10 can be operated rapidly and appropriately.

In addition, also in the present embodiment, when the first cover portion 70 is being assembled on the oil separation units 60, it is performed in such a manner that the contact portion 60A of the oil separation units 60 and the contact portion 70A of the first cover portion 70 come into contact with each other. When the first cover portion 70 and the second cover potion 80 are being assembled on each other, it is performed in such a manner that the contact portion 70B of the first cover portion 70 and the contact portion 80A of the second cover portion 80 come into contact with each other. Such contact portions 60A, 70A, 70B, 80A are provided over each site of the first cover portion 70, the second cover portion 80 and the oil separation units 60. Accordingly, the portion of contact with each other is not one portion, and the contacts can be established throughout the entire circumference of the oil separator 10.

### 3. Other embodiment

In the above-described embodiments, it is described that the upper surface portion of the second storage chamber 90 is formed in the two-layer structure by the first cover portion 70 and the second cover portion 80. However, a scope of application of the present invention is not limited to this. For example, at the second storage chamber 90, the two-layer structure can be formed only between the gas discharge port 69, which serves as the opening end portion of the gas exhaust portion 63, and the gas discharge hole 81.

In the above-described embodiments, it is described that at least part of the lateral surface portion is formed in the two-layer structure by the first cover portion 70 and the second cover portion 80. However, a scope of application of the present invention is not limited to this. That is, the lateral surface portion does not need to be formed in the two-layer structure.

In the above-described embodiments, it is described that the portion formed in the two-layer structure is the closed space portion. However, a scope of application of the present invention is not limited to this. That is, it can be configured in such a manner that the portion of the two-layer structure does not correspond to the closed space portion.

In the above-described embodiments, it is described that the first cover portion 70, the second cover portion 80 and the oil separation unit 60 are provided with the contact portions 60A, 70A, 70B, 80A formed by the surfaces facing the same direction in a state where the first cover portion 70 and the second cover portion 80 are assembled on the oil separation unit 60. However, a scope of application of the present invention is not limited to this. It can be configured not to include the contact portions 60A, 70A, 70B, 80A. In addition, it can be configured in such a manner that the first cover portion 70, the second cover portion 80 and the oil separation unit 60 are not formed by being assembled from the same direction.

In the above-described embodiments, it is described that the closed space portion is between the first cover portion 70 and the second cover portion 80. However, a scope of application of the present invention is not limited to this. For example, heat insulation material may be provided between the first cover portion 70 and the second cover portion 80. The heat insulation material can be liquid and can be an individual insulating material to be wrapped around.

### INDUSTRIAL APPLICABILITY

The present invention can be applied to an oil separator separating oil mist from blow-by gas.

### EXPLANATION OF REFERENCE NUMERALS

- 10:: oil separator
- 40:: distribution chamber
- 41:: inflow port
- 50:: branch passage
- 60:: oil separation unit
- 60A:: contact portion
- 70:: first cover portion
- 70A:: contact portion
- 70B:: contact portion
- 80:: second cover portion
- 80A:: contact portion
- 90:: second storage chamber (storage space portion)
- 69:: gas discharge port

## Claims

1. An oil separator comprising:
at least one set of cyclone-type oil separation unit performing gas-liquid separation of blow-by gas;
a distribution chamber distributing the blow-by gas flowing into the oil separation unit;
an inflow port causing the blow-by gas to flow into the distribution chamber;
a branch passage causing the blow-by gas to flow from the distribution chamber to each oil separation unit individually;
a first cover portion placed over the oil separation unit to include therewithin the distribution chamber, the inflow port and the branch passage and to enclose the distribution chamber, the inflow port and the branch passage;
a second cover portion including therewithin the first cover portion and enclosing the first cover portion, wherein
part of at least an upper surface portion of the oil separator is formed in a two-layer structure by the first cover portion and the second cover portion.

2. The oil separator according to claim 1, wherein
at least part of a lateral surface portion of the oil separator is formed in the two-layer structure by the first cover portion and the second cover portion.

3. The oil separator according to either claim 1 or 2, wherein the portion formed in
the two-layer structure corresponds to a closed space portion.

4. The oil separator according to any one of claims 1 to 3, wherein each of the first cover portion, the second cover portion and the oil separation unit is provided with a contact portion formed by a surface facing a same direction in a state where the first cover portion and the second cover portion are assembled on the oil separation unit.

5. The oil separator according to any one of claims 1 to 4, wherein heat insulation material is provided between the first cover portion and the second cover portion.

6. The oil separator according to any one of claims 1 to 5, wherein at least an upper surface portion of a storage space portion, at which the blow-by gas discharged from a gas discharge port of the oil separation unit after the gas-liquid separation is performed is stored, is formed in the two-layer structure.
